# EUROPEAN PATENT SPECIFICATION

(11) **EP 0 918 902 B1**
(45) Date of publication and mention of the grant of the patent: **14.03.2001**
(21) Application number: 97936773.7
(22) Date of filing: 12.08.1997
(51) Int. Cl.: D06N 3/04, D06N 3/18, B32B 27/12, A41D 31/02

(54) **WATER-VAPOUR-PERMEABLE COMPOSITE MATERIAL**
WASSERDAMPFDURCHLÄSSIGES VERBUNDMATERIAL
MATERIAU COMPOSITE PERMEABLE A LA VAPEUR D'EAU

(30) Priority: 15.08.1996 GB 9617181
(43) Date of publication of application: 02.06.1999
(73) Proprietor: W.L. GORE & ASSOCIATES (UK) LTD, London WC2A 2JP (GB)
(72) Inventor: HALLEY, David, George, St. Bothwells TD6 0AR (GB); CLARKSON, George, W. Lothian EH49 7SS (GB); TROUBA, John, Edward, Avondale, PA 19311 (US)
(74) Representative: Horner, Martin Grenville
(86) International application number: GB9702172
(87) International publication number: WO9806891

(56) References cited:
- EP-A- 0 422 918
- WO-A-90/15713
- US-A- 4 636 423

## Description

The present invention relates to a flexible water-resistant water-vapour-permeable composite material, particularly for use in garments, which exhibits a combination of good breathability (i.e. water vapour transmission) and good durability.

Water-vapour-permeable laminate materials which are resistant to liquid water penetration are known from US patents 3,953,566 and 4,194,041 (W. L. Gore & Associates Inc.) US Patent No. 3,953,566 refers to the production of an expanded porous polytetrafluoroethylene (PTFE) membrane. Such membranes generally have intrinsically poor abrasion resistance. US Patent No. 4,194,041 discloses a material which comprises a porous membrane (particularly expanded PTFE) provided on one surface thereof with a continuous layer of a hydrophilic material which is water-vapour-permeable, such as a hydrophilic polyurethane which has poor abrasion resistance. Other water-resistant water-vapour-permeable materials also having poor abrasion resistance are also commercially available and these include polyurethane coatings applied to a fabric, polyurethane membranes laminated to a fabric, and polyester membrane-fabric combinations.

Such materials often include an inner liner which protects against abrasion the polyurethane-coated face of the material in use. The preformed liner is generally laminated to the polyurethane-coated face by means of a layer of adhesive. However, the liner adds to the cost, weight and bulk of the material. In some applications, it may be desirable to eliminate the liner. However, this has the disadvantage of exposing the soft hydrophilic polyurethane directly to abrasive forces.

US Patent No. 5,026,591 discloses coating a scaffold material (expanded PTFE or microporous polypropylene) with a continuous coating of a hydrophilic material (hot melt hydrophilic polyurethane or polyurethane acrylate) and pressing directly into the coating a substrate (a polyamide non-woven, a polycotton woven blend etc.) and then allowing the coating to cure. The objective is to provide a continuous coating of hydrophilic material without any leaks therein, sandwiched between the scaffold material and the substrate.

US Patent No. 4,925,732 discloses the production of a laminate for making shoes composed of a pair of moisture permeable materials (e.g. leather and fabric) adhered together by means of a moisture permeable adhesive (e.g. a polyurethane adhesive).

European Patent No. 0465817 discloses a laminate for use as a protective material comprising an expanded PTFE liquid barrier layer, having a water-vapour permeable adhesive layer thereon, and active carbon beads and a net partially embedded in the adhesive layer. The net however remains above the surface of the adhesive so as to protect the active carbon beads from being mechanically dislodged. The net thickness is typically about 0.5 mm (500 microns).

Water-resistant materials which resist liquid water penetration are well known to persons skilled in the art of making rainwear. Clearly, the degree of water-resistance required in a so-called waterproof garment depends upon the severity of the climatic conditions to which it is subjected. A suitable test of water-resistance (Suter test) is described herein. An acceptable practical indication of water-resistance is one in which there is no evidence of water being forced through a sample by a pressure of 1.4 pounds per square inch (0.1kg/cm²), or more typically 2.0 pounds per square inch (0.14kg/cm²). This also gives a measure of hydrophobicity in respect of porous materials.

The benefit of a water-vapour-permeable material is that perspiration from the wearer's body is allowed to escape from within the garment by passage through the material, thus preventing build-up of liquid water within the garment and consequent clammy feeling. In order to be considered as water-vapour-permeable, the flexible substrate should generally have a water-vapour-permeability of at least 1,000, preferably greater than 1500 and more preferably greater than 3000 g/m²/day. However, values in excess of 100,000 g/m²/day are possible with certain substrates. The overall water-vapour-permeability of the flexible composite material of the present invention will usually be somewhat lower than this (e.g. 5,000 to 12,000 g/m²/day or up to 30,000 g/m² day for certain substrates) but generally speaking its water-vapour-permeability may also be within the ranges outlined above.

A suitable water-resistant water-vapour-permeable flexible membrane is disclosed in US Patent No. 3,953,566 which discloses a porous expanded polytetrafluoroethylene (PTFE) material. The expanded porous PTFE has a micro-structure characterised by nodes interconnected by fibrils. If necessary, the water-resistance may be enhanced by impregnating the expanded PTFE with an hydrophobic impregnant (such as a low molecular weight perfluoro compound, for example a perfluoroalkyl acrylate or methacrylate). Such impregnants are also oleophobic. The impregnants can coat the nodes and fibrils of the porous PTFE.

The water-resistant water-vapour-permeable membrane might also be a microporous material such as a high molecular weight microporous polyethylene or polypropylene, microporous polyurethanes or polyesters.

In addition, the water-resistant water-vapour-permeable flexible membrane may include a coating of a water-resistant water-vapour-permeable hydrophilic film of the type disclosed in US Patent No. 4,194,041, the membrane and hydrophilic film together forming a substrate. Such hydrophilic films are generally also oleophobic. The flexible membrane may be formed of porous expanded PTFE as described in US Patent No. 3,953,566.

Such materials as described are essentially conventional.

It is an object of the present invention to provide good abrasion resistance in water-resistant water-vapour-permeable composite materials, without the need for a protective liner.

According to the present invention there is provided a composite material for a garment comprising
(a) a water-resistant, water-vapour-permeable, flexible substrate having a first and second side;
(b) a fabric secured to said first side of the substrate; and
(c) a plurality of discrete abrasion-resisting polymeric dots forming a discontinuous lining-forming pattern on the surface of said second side of the substrate and which dots resist abrasion of the flexible substrate.

According to a further aspect of the present invention the composite material is embodied in garments such as hats, gloves or shoes.

According to a still further aspect of the present invention there is provided a process of producing a composite material for a garment comprising securing a fabric to a first side of a flexible, water-resistant, water-vapour-permeable substrate, and applying a plurality of abrasion-resisting polymeric dots to a second side of said substrate in order to form a discontinuous lining-forming pattern over the surface of said second side to resist abrasion of the flexible substrate.

The contribution made by the present invention is to provide a discontinuous abrasion-resisting lining-forming layer over the flexible substrate material so as to provide a protective surface layer which protects the water-vapour-permeable flexible substrate from abrasion forces in a particularly lightweight, convenient and economical manner. Thus, it is surprisingly found that the application of an abrasion resisting layer, comprising a discontinuous pattern of abrasion-resisting polymeric material is in itself sufficient to provide abrasion resistance and durability, without the need to apply the conventional inner liner. The abrasion-resisting polymeric material constitutes the surface layer of the composite material and is the layer which is innermost when the material is used to form a garment, that is to say it is the surface layer which is closest to the skin of the wearer. It has been surprisingly found that the discontinuous pattern of abrasion-resisting material, whilst providing the necessary moisture vapour permeability, is sufficient to resist abrading of the material during flexing thereof, both against itself and against any other materials which may be present (for example other garments worn by the wearer).

For the purposes of the present invention, it is preferable that, for a given polymer, the resistance to abrasion is greater for a lining formed by polymeric dots which have a smooth, rounded, non-angular external surface. Also, smooth rounded dots, when constituting the innermost lining surface of a garment, will present a more comfortable feel to the wearer and avoid snagging of the skin or any inner clothing worn by the wearer.

Embodiments of the present invention will now be described, by way of example, with reference to the accompanying drawings, in which:-
Fig. 1 is a fragmentary plan view, to an enlarged scale of a first embodiment of a composite lining material in accordance with the invention;
Fig. 2 is a diagrammatic cross-sectional view on the line A-A of Fig. 1;
Fig. 3 is a diagrammatic cross-sectional view similar to Fig. 2 of a second embodiment of the present invention;
Fig. 4 is a perspective view from above of an image produced from a Scanning Electron Microscope (SEM) of a composite lining material incorporating polymeric dots in accordance with the invention;
Fig. 5 is a vertical sectional view of an image produced from a Scanning Electron Microscope of a polymeric dot on a composite lining material in accordance with the invention; and
Fig. 6 is a schematic illustration of a coating apparatus for applying, in accordance with the invention, an abrasion-resisting polymeric material onto a substrate.

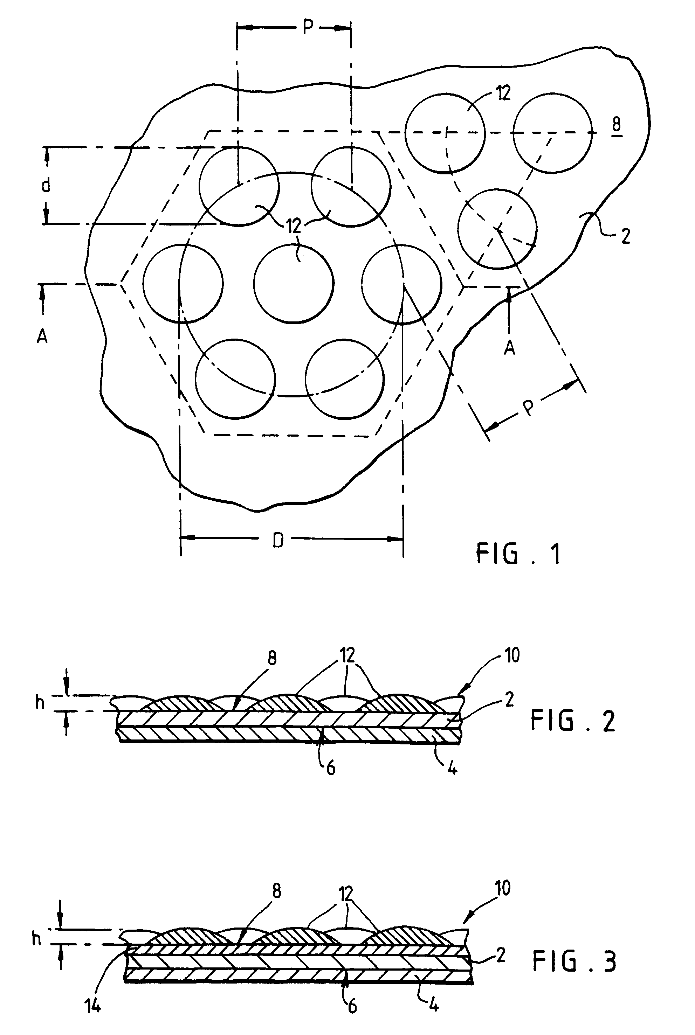

Referring to Figs. 1 and 2 of the drawings, a composite lining material comprises a waterproof, water-vapour-permeable flexible substrate 2 having a face fabric 4 adhered to one side 6 of the substrate 2. A second side 8 of the substrate 2 has firmly adhered thereto an abrasion-resisting, discontinuous lining-forming layer 10 made up of a plurality of discrete, substantially smooth-surfaced non-angular dots 12 of an abrasion-resisting polymeric material such as an abrasion-resisting polyurethane and which dots project from the side 8 of the substrate 2. The polymer from which the dots are made should have an elastic modulus of greater than about 800 psi (5.5 Nmm⁻²) in order to provide the desired abrasion resistance.

The flexible substrate 2 is composed of an expanded polytetrafluoroethylene (PTFE) membrane as disclosed in aforementioned US Patent No. 3,953,566 and which PTFE has a porous microstructure characterised by nodes interconnected by fibrils. The membrane 2 is resistant to passage of liquid water therethrough but is water-vapour-permeable. The membrane 2 has a weight of 15g/m² and a maximum pore size of 0.2 microns determined by known bubble point measurement techniques such as that described in US Patent No. 5026591 (Henn).

The face fabric 4 is laminated to side 6 of substrate 2 by any conventional means and the face fabric 4 can be one of a number of known face fabrics such as a woven, non-woven or knitted fabric of a material such as nylon or polyester. In use, the face fabric constitutes the outer surface of a garment formed from the composite material and provides the required visual or aesthetic appearance and the necessary mechanical properties.

Each of the polyurethane dots 12 is substantially circular in plan view as shown in Fig. 1 and part-spherical in cross-section as shown in Fig. 2 defined by an arc having a radius of the order of about 400 microns. In the present embodiment the dots 12 are arranged in repeat regular pattern of seven dot rosettes, i.e. six dots are arranged around a central seventh dot. The rosettes are identified by the imaginary dotted lines in Fig. 1. Each dot 12 has a cross dimension in the plane of the substrate constituted by a diameter d of the order of 500 microns and a height of around 100 microns. The centres of the six dots 12 around their associated central dot lie on a circle having a diameter D of the order of about 1500 say 1460 microns and the distance or pitch between the centres of adjacent dots is of the order of 750 microns, i.e. the distance between the periphery of adjacent dots is about half of the dot diameter. The ratio of the distance between adjacent dot centres, the dot diameter and the dot height is for example with the range of 7.5:5:1 to 15:10:1. The dots 12 in the pattern of Fig. 1 occupy approximately 40% of the surface area of the composite material to which they are applied. All the foregoing measurements were taken from an image produced by a Scanning Electron Microscope.

Fig. 3 illustrates a second embodiment of the invention which is similar to the embodiment described above with reference to Figs. 1 and 2 and the same reference numerals are given to equivalent components of Figs. 1 and 2. The embodiment of Fig. 3 involves the incorporation of an additional hydrophilic coating 14 of a water-resistant water-vapour permeable material such as a water-vapour-permeable polyurethane of the type disclosed in aforementioned US Patent No. 4,194,041.

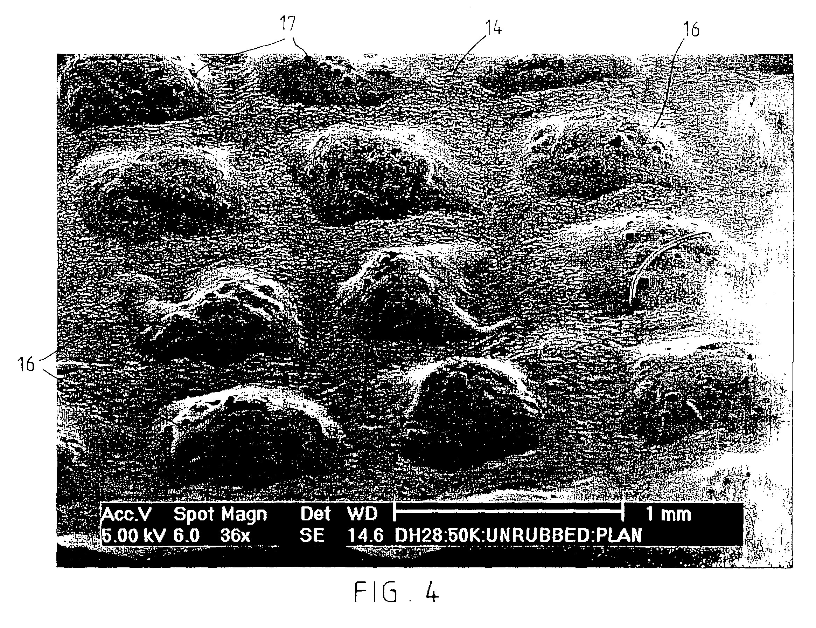

Fig. 4 illustrates a third embodiment of the invention as viewed by a Scanning Electron Microscope showing a substrate 14 provided with a plurality of polymeric dots 16 arranged in parallel rows. Each dot 16 is generally circular in plan as can be seen from Fig. 4 and has a plurality of minor perforations 17 in its surface created during formation of the dots.

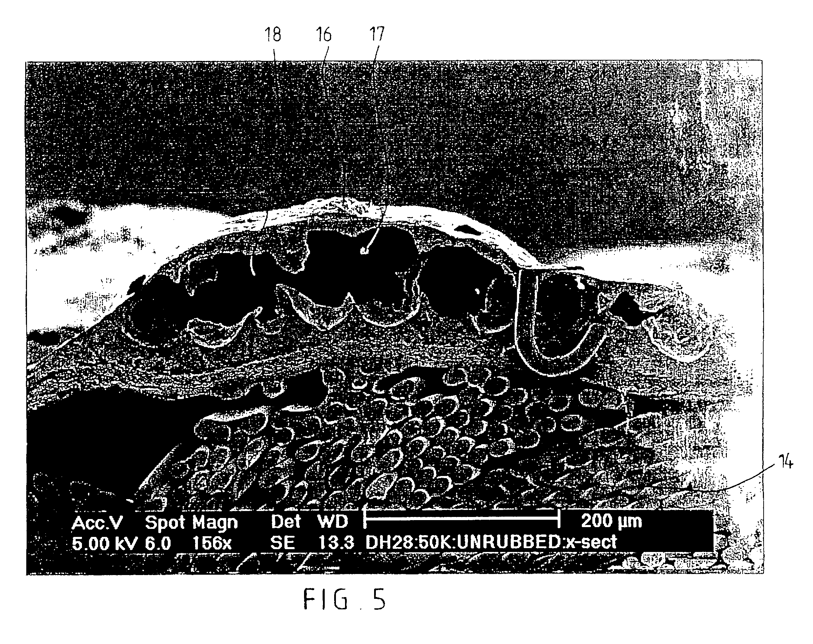

Fig. 5 illustrates, to an enlarged scale, a vertical section of one of the dots 16 of Fig. 4 and it is apparent that the outline of the dot 16 is substantially part-spherical in vertical section and has a hollow interior 18.

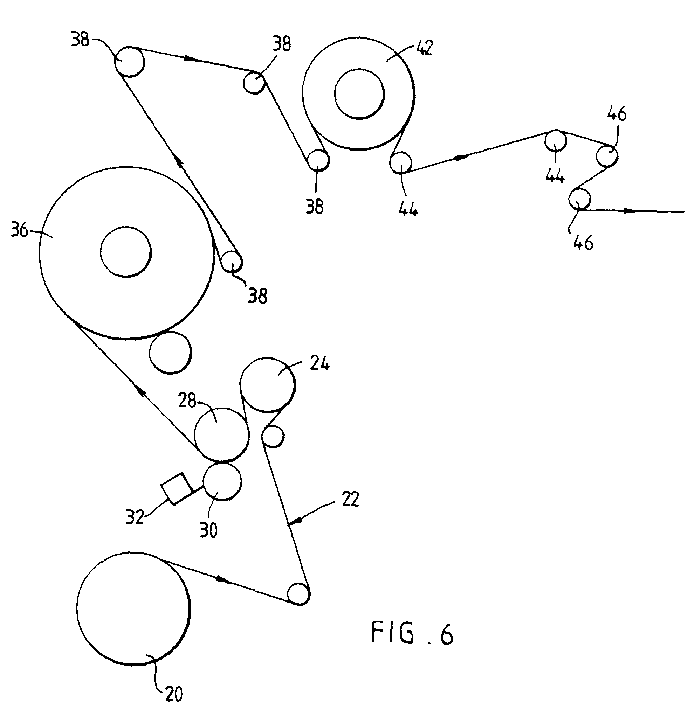

Fig. 6 illustrates diagrammatically one form of coating apparatus suitable for applying a layer of abrasion resisting polymeric dots to a flexible substrate to produce a composite material as described above with reference to Fig. 1 to 3. The construction of the apparatus and its mode of operation follow the general disclosure of US Patent No. 5,026,591.

Referring to Fig. 6, a roll 20 of expanded PTFE membrane to which is laminated a face fabric formed of woven texturised nylon or woven polyester is unwound and fed as a web 22 of width 140 cm. to 150 cm over a brake roller 24 which serves to apply a constant tension thereto and then into the nip between a pressure roller 28 and a gravure roller 30. The gravure roller 30 has a seven dot rosette pattern of surface recesses therein for receiving liquid polymeric material and applying this in the form of a pattern of discrete polymeric dots to the web 22 of substrate membrane. The liquid polymeric layer is a reactive hot-melt hydrophilic polyurethane (designated and hereinafter referred to as OLC-5T) prepared according to Example 1 of US Patent No. 5,209,969). The polyurethane OLC-5T when cured is tough and abrasion-resistant having an elastic modulus of greater than 800 psi (5.5 Nmm⁻²). The liquid polymeric material is applied at a temperature of 40 to 80°C on to the gravure roller 30 having a temperature of 40 to 80°C by means of a doctor blade assembly 32 held at a temperature of between 40 and 80°C which applies the liquid polymeric material to the surface of the gravure roller 30 and wipes excess material therefrom, such that the recesses in the surface of the gravure roller 30 are filled with liquid polymeric material. Further rotation of the roller 30 enables the polymeric material to be gravure printed on to one side of the web 22 of substrate membrane.

The membrane with the applied polymeric layer of discrete dots is then passed over an oil-filled hot roller 36 where the oil temperature is between 160°C and 200°C which effects curing of the polymeric material at an elevated temperature of between 160 and 200°C. The composite material so formed is then fed over a series of idler rolls 38. Cooling occurs as the composite material passes over cooling can 42 which is typically filled with cold water. The composite material is hauled off over further idler rollers 44 and load cell rollers 46 which monitor tension at around 100 to 400 N in the continuous web of composite material and by which time the abrasion-resisting polymeric dots have at least partially cured to a solid mass, thereby allowing the composite material to be rolled up onto a core. The continuous substrate is passed through the coating apparatus at a speed of about 7 to 15m/min.

It will be appreciated that the embodiments described with reference to Figs. 1 to 5 and the method described with reference to Fig. 6 are examples only of the present invention and that variations are possible within the scope of the invention as set out below.

It has been found desirable to lay down the dots 12 of abrasion-resisting polymeric material directly onto the flexible substrate 2 such as to form the abrasion-resisting layer in situ. The use of preformed materials as the abrasion-resisting layer has been found to be unsatisfactory. Convenient application methods include screen printing, as well as gravure printing as described above in relation to Fig. 6 or spraying. This results in an intimate bond being formed between the abrasion-resisting layer of dots 12 and the flexible substrate 2, whilst at the same time allowing a suitably thin layer of abrasion-resisting material to be applied. The polymeric material may be applied to selected areas of the substrate in liquid form from a hot melt, by solution coating or by emulsion coating. The liquid polymeric material may include a prepolymer which cures in situ, a UV light curable polymer, a room temperature vulcanising polymer, or a thermoplastic polymer. Suitable elastomeric polymers include polyesters, polyvinylchloride, polyamides, silicones, polyurethanes, or polyurethane-polyester composites. Reactive polyurethanes, such as blocked polymers, whose reactive groups unblock above a certain temperature are especially useful. Fillers may be included provided their particle size is less than the smallest dimension of the discontinuous layer. The cured polymer will generally be resistant to conventional dry-cleaning solvents. Where the substrate 2 includes a hydrophilic coating polyurethane layer 14 (Fig. 3), the abrasion resisting polymer when cured will be chemically compatible therewith.

From the foregoing it will be appreciated that a "hard" abrasion-resistant polyurethane such as OLC-5T is a preferred polymeric material for the formation of dots in accordance with the invention. It should be noted that the type of polyurethane used for the dots has different characteristics from the "soft" type of polyurethane which may be used for the hydrophilic coating 14 in the embodiment of Fig. 3.

It will be understood by those skilled in the art that within the generic family of polyurethane polymers there exists a wide range of polymers having diverse properties of toughness, hardness, elasticity, hydrophilicity etc. Generally, it is known that polyurethane polymers having a sufficient degree of hydrophilicity and water vapour permeability to render them suitable for use in garments have poor toughness and abrasion resistance. However, polyurethane polymers exist which are very tough and have high abrasion resistance but do not have the water vapour permeability that is required for garment applications.

In the present invention the abrasion-resisting dot polymer is selected from the latter range of polyurethane polymers and it has been found that polymers having an elastic modulus of greater than about 800 psi (5.5 Nmm⁻²) are suitable materials for forming the abrasion-resisting dots in accordance with the present invention.

The abrasion resisting polymer may itself be water-vapour-permeable. This, however, is generally not necessary provided that the percentage coverage of the substrate material is not too great to substantially affect the water-vapour-permeability thereof.

The pattern of abrasion-resisting material in the form of discrete dots is discontinuous in the sense that it includes open areas free of polymeric material and does not form a continuous layer over the surface of the substrate. Generally, the percentage coverage of the surface of the flexible substrate 2 by the polymeric dots 12 is in the region 20-80%, particularly 30-70%, more especially 40-60% by area. It will be appreciated that the spacing between the dots 12 should not be so great as to permit ready access to open areas whereby abrasion of these open areas may occur.

The discontinuous pattern of discrete dots may be any suitable pattern so long as the coverage is such as to tend to prevent abrasion of the substrate. The pattern needs to be chosen so as to exhibit good handleability.

The dots 12 need not be substantially circular in shape as described in Fig. 1 to 3. The dots may in principle be of any shape, such as squares, rectangles, polygons etc. However, in order to reduce abrasion, squares, diamonds or other shapes having sharp corners are not preferred. Preferably, the cross-section of the dots in a plane normal to the substrate is substantially hemispherical, part-spherical or truncated hemispherical in shape.

The pattern of dots 12 may be a random pattern or an orderly pattern according to a predetermined spatial geometry. Although specific dimensions are given for the dots 12 described in Figs. 1 to 5, it will be understood that the dimensions can be varied in accordance with the purpose for which the composite material is to be used. Each dot is preferably of a maximum cross-dimension or width in the plane of the substrate which is less than 5000 microns, for example in the range 100 to 1000 microns, preferably 200-800, particularly 400-600 microns. The dots 12 may be spaced apart centre-to-centre by 200-2000 microns, particularly 300-1500, especially 400-900 microns. Each dot may have a height in the range 10-200 microns, preferably 70-140, particularly 80-100 microns.

The material of the present invention may be used to produce a variety of products including wearing apparel such as garments including hats, gloves or shoes.

An important advantage of the water-vapour-permeable water-resistant composite materials of the present invention is their ability to be seam sealed. Such sealing is carried out in order to seal the stitched seams of a water-resistant garment to prevent liquid water entering through the stitching holes. It is accomplished by applying a tape coated with a heated hot melt adhesive under pressure over the inside of the seam and bonding thereto. However, the seam-sealing of conventional material comprising a face fabric, intermediate porous membrane and inner lining is impeded by the presence of the inner lining which lies between the water-resistant membrane and the sealing tape, and which hinders the formation of a seal between the membrane and the tape.

It is found that the materials of the present invention have good seam sealing properties and adhesion of the seam sealing tape to the abrasion-resisting layer is good.

In use of a composite material of the type of the present invention, abrasion forces lead to the creation of leaks in the water-resistant composite material. This destroys the water-resistance of a garment constructed from the composite material. An appropriate test method for determining abrasion-resistance for present purposes is to measure the degree of abrasion until one or more leaks is formed in the material. The abrasion-resistance of the composite material including the abrasion-resisting layer according to the present invention has an abrasion-resistance which is greater (within experimental limits) than a flexible substrate without the abrasion-resisting layer. Depending on the nature of the abrasion-resisting layer, the abrasion resistance of the material according to the present invention may be at least 1.5 times, advantageously at least 4.0 times, the abrasion-resistance of the flexible substrate alone. In particular circumstances, the abrasion-resistance may be increased by up to 10 times or more. On the other hand, whilst the moisture vapour permeability of the substrate is decreased somewhat by the application of the abrasion-resisting layer (which could itself have a degree of water vapour permeability), such decrease would be also expected from the lamination of an inner lining to a substrate as in previously proposed technology. Thus, the use of an abrasion-resisting layer according to the present invention has the capacity to markedly increase the abrasion resistance of the material whilst at the same time not unduly decreasing the water-vapour-permeability.

It is surprisingly found that the decrease in water vapour permeability is proportionally less than the decrease in free surface area of the substrate on application of the abrasion resisting layer.

Tests on the composite material of the invention to measure abrasion resistance and water-resistance or water-vapour permeability were carried out using the following methods:-

### TEST METHODS

### TEST FOR MOISTURE VAPOUR TRANSMISSION RATE (MVTR)

### (Potassium Acetate Method)

Moisture vapour transmission rate (MVTR), i.e. water-vapour-permeability, was measured by placing approximately 70 ml of a solution consisting of 35 parts by weight of potassium acetate and 15 parts by weight of distilled water into a 133 ml. polypropylene cup, having an inside diameter of 6.5 cm at its mouth. An expanded polytetrafluoroethylene (PTFE) membrane having a minimum MVTR of approximately 85,000g/m²/24 hrs. as tested by the method described in US Patent No. 4,862,730 to Crosby and available from W. L. Gore & Associates, Inc. of Newark, Delaware, was heat sealed to the lip of the cup to create a taut, leakproof, microporous barrier containing the solution.

A similar expanded PTFE membrane was mounted to the surface of a water bath. The water bath assembly was controlled at 23°C plus or minus 0.2°C, utilising a temperature controlled room and a water circulating bath. The sample to be tested was allowed to condition at a temperature of 23°C and a relative humidity of 50% prior to performing the test procedure. Three samples were placed so that each sample to be tested was in contact with the expanded PTFE membrane mounted over the surface of the water bath, and was allowed to equilibrate for at least 15 minutes prior to the introduction of the cup assembly.

The cup assembly was weighed to the nearest 1/1000g and was inverted onto the centre of the text sample.

Water transport was provided by the driving force between the water in the water bath and the saturated salt solution providing water flux by diffusion in that direction. The sample was tested for 20 minutes and the cup assembly was then removed, and weighed again to within 0.001g.

The MVTR of the sample was calculated from the weight gain of the cup assembly and was expressed in grams of water per square meter of sample surface area per 24 hours.

### ABRASION TEST

Abrasion testing was carried out using a Martindale Abrasion machine and by rubbing samples with a standard wool toll SM25 which complied with draft ISO ST CD 12974-1 Table 1, clause 5.6.2 which is based on British Standard BS 5690, 1991.

Briefly, the test procedure is as follows:

Circular specimens of sample material are abraded on a reference abradant of a cross-breed worsted spun plain-woven wool fabric under pressure of 12kPa with a cyclic planar motion in the form of a Lissajous figure, which is the resultant of two simple harmonic motions at right angles to each other. The resistance to abrasion corresponds to the number of cycles to the defined end point. The abrasion machine is of the type described by Martindale (J.Text.Inst. 1942:33,T151).

Each sample is removed from the machine after a predetermined number of rubs and tested for liquid water-resistance as described herein (under a hydrostatic pressure of 2 psi (0.14 kg/cm²) for 3 minutes) until a leak was detected which indicated breakdown of water-resistance. Samples were tested every 100 rubs up to a 1000 rubs. They were then tested at the following intervals:
Every 2,000 rubs up to 20,000 rubs
Then every 5,000 " " 50,000 "
Then " 10,000 " " 100,000 "
and then " 20,000 ".

### TEST FOR WATER-RESISTANCE (SUTER TEST)

Samples of the present invention were tested for water-resistance using a modified Suter test apparatus, which is a low water entry pressure challenge. The test procedure is set out in BS3424, method 29C. Water was forced against the underside of a sample of 11.25 cm diameter sealed by two circular rubber gaskets in a clamped arrangement. A sample having a substrate of expended PTFE with a hydrophilic coating on one side was mounted with the hydrophilic coating downwards against the water, the expanded porous PTFE membrane being uppermost. It is important that a leakproof seal is formed by the clamp mechanism, gaskets and sample. In deformable samples, the sample was overlaid by a reinforcing scrim (e.g. an open non-woven fabric) clamped over the sample. The upper side of the sample was open to the atmosphere and visible to the operator. The water pressure on the underside of the sample was increased to 2 pounds per square inch (0.14 kg/cm²) by a pump connected to a water reservoir, as indicated by a pressure gauge and regulated by an in-line valve. The upper side of the sample was visually observed for a period of three minutes for the appearance of any water which might be forced through the sample in the event of lack of water-resistance. Liquid water seen on the surface was interpreted as a deficiency in the water-resistance of the sample (i.e. a leak). The sample passed the test if no liquid water was visible on the upper side of the sample within the three minute test period.

### WASH TO LEAKAGE TEST

The purpose of this test is to determine the time at which leakage occurs in laminated samples by continuous wet flex and abrasion over an extended period of time.

Full width samples of approx. 36 cms in length are cut and the samples are trimmed on all 4 sides using pinking scissors. Where samples are likely to fray and cause tangling, all edges are sewn. Enough samples are cut to give a total wash load of 900±90gms. Make weight fabric samples can be added to make the total weight if not enough samples are available. Samples are then conditioned at 20±2°C and 65±5% relative humidity for 4 hours.

The conditioned samples are tested on a Calibrated Hydrostatic Head Tester at 5 positions across the width of the fabric to 6.89 kPa (1 p.s.i.) for 3 mins. to check for any leakage before washing. The positions are marked with an ink marker, so that the same positions can be tested every time. The machine will have a ramp rate of 60 cms water pressure min. and samples will be tested at the 5 positions at 6.89 kPa (1 p.s.i.) for 3 mins.

Enough samples or samples plus make-weights are prepared to make a total load of 900±90 gms. for each machine. Samples are then washed according to the Kenmore wash method (QL 062). After approx. 72 hrs. wash the samples are hung to dry, conditioned, then hydrostatically tested at the same 5 positions to 6.89 kPa (1 p.s.i.) for 3 mins. The test site is deemed to have failed when the first small growing leak is observed. The wash/dry/test cycle is repeated until all 5 positions show signs of leaking.

### Kenmore Wash Method (QL062) (referred to above)

This describes how the Kenmore wash machine heavy duty 70 series was used to do continuous wet flex and abrasion testing.

The machine has clear vented perspex cover to prevent the water temperature from exceeding 45°C with continuous washing. The temperature can be checked using a thermometer.

The machine had the water level control set at medium. The water temperature control was set to cold, and the machine cycle selector set at 14 which will give an agitation speed of 150-180 r.p.m. The auto/hand switch should be left on auto. The lid was closed with the isolator screwed fully in. The machine cycle selector knob was pulled out to make the machine fill with water until it reached a level at which the cut-off switch engages. The isolator was unscrewed and 60±4 litres of water poured into the machine and the depth of water measured. After adding the required samples to a total wash load of 900±90g the lid was closed and the isolator screwed in. The wash cycle selector knob was operated to set the machine to wash mode. When ready to spin out the water, the control knob was operated and turned to spin. The water was drained from the machine. The isolator switch was unscrewed and the lid opened to inspect the samples.

The samples were checked approximately every 10 hours for tangling and untangled if required. Cold water added to keep the volume correct every 24 hrs. approx. and the load of fabrics should be a constant weight. The water temperature was not allowed to exceed 45°C.

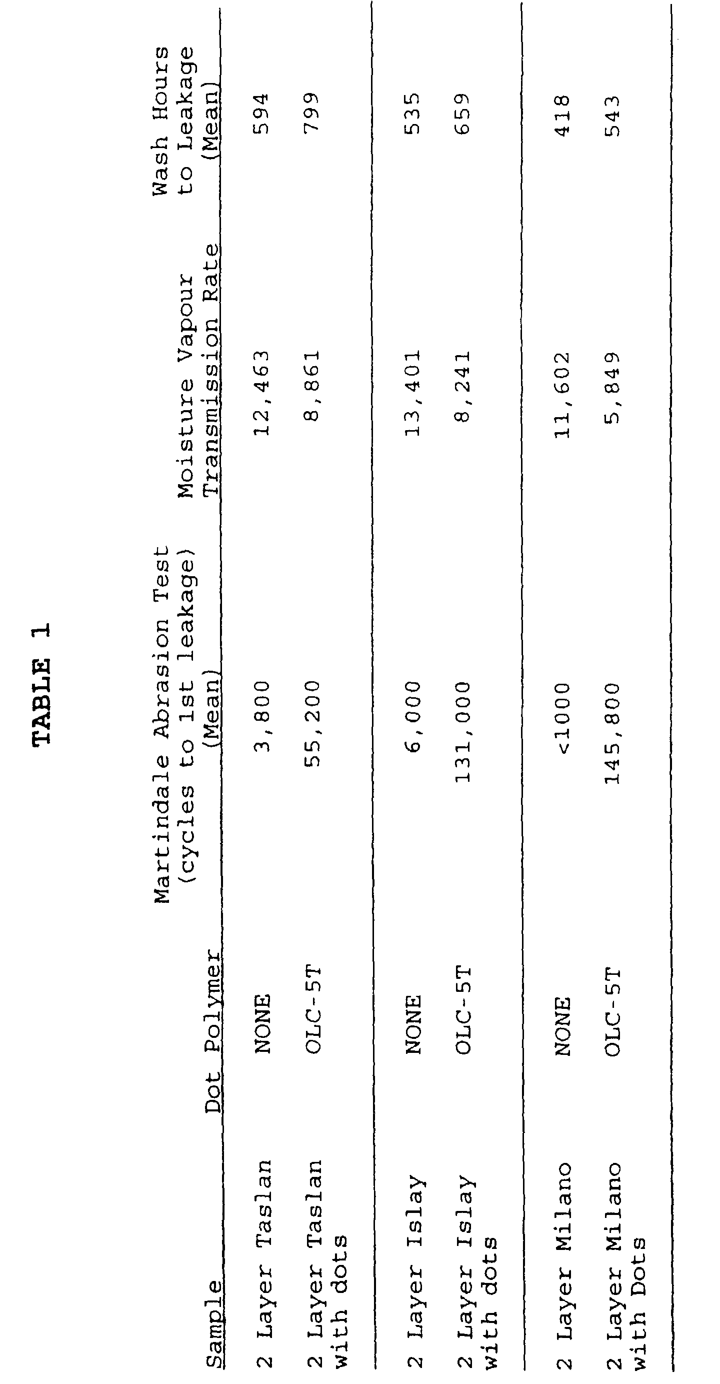

The foregoing Table 1 refers to six different laminates namely 2 layer Taslan, 2 layer Taslan with dots; 2 layer Islay, 2 layer Islay with dots; 2 layer Milano, 2 layer Milano with dots.

2 layer Taslan is a material comprising a face fabric of woven texturised nylon 66 laminated to an expanded PTFE membrane coated on its opposing surface with a continuous hydrophilic layer of water-vapour-permeable polyurethane as described in US Patent No. 4,194,041.

2 layer Islay is a material comprising a face fabric of woven texturised polyester twill fabric laminated to a porous expanded PTFE membrane coated on its opposing surface with a continuous hydrophilic layer of a water-vapour-permeable polyurethane as described in US Patent No. 4,194,041.

2 layer Milano is a material comprising a face fabric of plain woven high tenacity texturised nylon 66 laminated to a porous expanded PTFE membrane coated on its opposing surface with a continuous hydrophilic layer of a water-vapour-permeable polyurethane as described in US Patent No. 4,194,041.

The above Taslan, Islay and Milano materials are available from W. L. Gore & Associates (UK) Ltd.

Each of the six samples were tested using the tests previously described for water-vapour-permeability (MVTR), abrasion resistance, and wash to leakage by comparing a 2 layer plain substrate, i.e. a substrate and face fabric without abrasion-resisting dots against 2 layer substrates with a pattern of abrasion-resisting dots in accordance with the invention. Each sample was tested in triplicate.

Table 1 shows that substantial increases in abrasion resistance to first leakage are obtained in each of the samples having the abrasion-resisting dots of the invention.

Table 1 also indicates the polymer used in each case for the abrasion-resisting polymeric dots which was a polyurethane polymer referred to as OLC-5T and which was prepared according to the teachings of Example 1 of US Patent No. 5,209,969.

As described above in relation to Fig. 6 of the accompanying drawings, the method of the present invention using the polyurethane polymer OLC-5T requires curing of the polymer at an elevated temperature of around 200°C, say 160-200°C.

The polyurethane polymer OLC-5T is one of a number of polymers which have been found satisfactory for the formation of dots in accordance with the present invention. It will be appreciated, however, that other polymeric materials can also be used provided their abrasion resistance is satisfactory for their purpose and they are compatible with the substrate materials with which they are to be used.

The polymer was printed according to a 7-dot rosette pattern of the type shown in Figure 1.

As also can be seen from Table 1, the water-vapour-permeability (MVTR) of the composite material of the present invention is less that of conventional 2-layer constructions but is at a level which is acceptable.

The wash to leakage test is another durability test which measures the time to leakage in a sample subjected to a continuous flex and abrasion under wet washing conditions. The wash durability of the materials of the present invention as set out in Table 1 is significantly better than that of the conventional corresponding 2-layer material.

Variation of the polymer print pattern (using OLC-5T polymer) resulted in minor variations in water-vapour-permeability of the inventive materials.

The composite material of the present invention has generally been found to possess the durability normally associated with 3-layer materials including a conventional inner lining but is closer to the comfort, handle and production costs of a conventional 2-layer material.

## Claims

1. A composite material for a garment comprising
(a) a water-resistant, water-vapour-permeable, flexible substrate (2) having a first (6) and second (8) side;
(b) a fabric (4) secured to said first side of the substrate; and
(c) a plurality of discrete abrasion-resisting polymeric dots (12) forming a discontinuous lining-forming pattern on the surface of said second side of the substrate and which dots resist abrasion of the flexible substrate.

2. A composite material as claimed in claim 1, in which the dots have a substantially smooth, non-angular profile.

3. A composite material as claimed in claim 2, in which each of the dots has a cross-section in the plane of the substrate which is substantially circular and a cross-section which is substantially part-spherical in a plane normal to the substrate.

4. A composite material as claimed in any of claims 1 to 3, in which the maximum dimension of the cross-section in the plane of the substrate is less than 5000 microns.

5. A composite material as claimed in claim 4, in which said maximum dimension is from 100 to 1000 microns.

6. A composite material as claimed in claim 5, in which said maximum dimension is from 200-800 microns.

7. A composite material as claimed in claim 6, in which said maximum dimension is from 400-600 microns.

8. A composite material as claimed in any preceding claim, in which each dot has a height in the range of 10 to 200 microns.

9. A composite material as claimed in claim 8, in which each dot has a height in the range of 70 to 140 microns.

10. A composite material as claimed in claim 9, in which each dot has a height in the range of 80 to 100 microns.

11. A composite material as claimed in any preceding claim in which the centre of each dot is spaced from the centre of an adjacent dot by 200 to 2000 microns.

12. A composite material as claimed in claim 11, in which the centre of each dot is spaced from the centre of an adjacent dot by 300 to 1500 microns.

13. A composite material as claimed in claim 12, in which the centre of each dot is spaced from the centre of an adjacent dot by 400 to 900 microns.

14. A composite material as claimed in any preceding claim, in which the ratio of the distance between centres of adjacent dots, the maximum dimension of each dot and the height of each dot is within the range of about 7.5:5:1 to about 15:10:1.

15. A composite material as claimed in any preceding claim, in which the percentage coverage of the surface of the substrate by the dots is 20 to 80%.

16. A composite material as claimed in claim 15, in which the percentage coverage of the surface of the substrate by the dots is 30 to 70%.

17. A composite material as claimed in claim 16, in which the percentage coverage of the surface of the substrate by the dots is 40 to 60%.

18. A composite material as claimed in any preceding claim, in which the substrate is a porous membrane.

19. A composite material as claimed in claim 18 in which the porous membrane is expanded polytetrafluoroethylene.

20. A composite material as claimed in claim 18 or 19, in which the substrate comprises the porous membrane and a coating of a water-vapour-permeable hydrophilic polymer and to which coating the dots are secured.

21. A composite material as claimed in claim 20, in which the hydrophilic polymer is a polyurethane or polyester.

22. A composite material as claimed in any preceding claim, in which said dots are formed from an abrasion-resisting polyurethane having an elastic modulus greater than about 800 psi (5.5 Nmm⁻²).

23. A composite material as claimed in claim 21 in which the dot-forming polyurethane is water-vapour-permeable.

24. A composite material as claimed in any preceding claim, in which the material was a water resistance of greater than 0.1 kg/cm.

25. A composite material as claimed in any preceding claim, in which the material has a water-vapour-permeability in excess of 1500 g/m²/day.

26. A composite material as claimed in any preceding claim, in which the dots are applied in the form of a plurality of rosettes.

27. A composite material as claimed in any preceding claim, in which the abrasion resistance of the composite material is at least 1.5 times the abrasion resistance of the flexible substrate alone.

28. A garment comprising a composite material as claimed in any preceding claim.

29. A garment as claimed in claim 28, in which the abrasion-resisting polymeric dots form the innermost component of the garment to form a lining.

30. A process of producing a composite material for a garment comprising securing a fabric to a first side of a flexible, water-resistant, water-vapour-permeable substrate; and applying a plurality of abrasion-resisting polymeric dots to a second side of said substrate in order to form a discontinuous lining-forming pattern over the surface of said second side to resist abrasion of the flexible substrate.

31. A process as claimed in claim 30, comprising applying the polymeric dots by means of gravure printing.

32. A process as claimed in claim 30 or 31, in which the dots have a substantially smooth, non-angular profile.

33. A process as claimed in claim 32, in which each of the dots has a cross-section in the plane of the substrate which is substantially circular and a cross-section which is substantially part-spherical in a plane normal to the substrate.

34. A process as claimed in any of claims 30 to 33, in which the maximum dimension of the cross-section in the plane of the substrate is less than 5000 microns.

35. A process as claimed in claim 34, in which the maximum dimension of the cross-section is from 100 to 1000 microns.

36. A process as claimed in claim 35, in which the maximum dimension of the cross-section is from 200-800 microns.

37. A process as claimed in claim 36, in which the maximum dimension of the cross-section is from 400-600 microns.

38. A process as claimed in any of claims 30 to 37, in which each dot has a height in the range of 10 to 200 microns.

39. A process as claimed in claim 38, in which each dot has a height in the range of 70 to 140 microns.

40. A process as claimed in claim 39, in which each dot has a height in the range of 80 to 100 microns.

41. A process as claimed in any of claims 30 to 40, in which the centre of each dot is spaced from the centre of an adjacent dot by 200 to 2000 microns.

42. A process as claimed in claim 41, in which the centre of each dot is spaced from the centre of an adjacent dot by 300 to 1500 microns.

43. A process as claimed in claim 42, in which the centre of each dot is spaced from the centre of an adjacent dot by 400 to 900 microns.

44. A process as claimed in any of claims 30 to 43, in which the ratio of the distance between centres of adjacent dots, the maximum dimension of each dot and the height of each dot is within the range of about 7.5:5:1 to about 15:10:1.

45. A process as claimed in any pf claims 30 to 44, in which the percentage coverage of the surface of the substrate by the dots is 20 to 80%.

46. A process as claimed in claim 45, in which the percentage coverage of the surface of the substrate by the dots is 30 to 70%.

47. A process as claimed in claim 46, in which the percentage coverage of the surface of the substrate by the dots is 40 to 60%.

48. A process as claimed in any of claims 30 to 47, in which the substrate is a porous membrane.

49. A process as claimed in claim 48 in which the porous membrane is expanded polytetrafluoroethylene.

50. A process as claimed in claims 48 or 49, in which the substrate comprises the porous membrane and a coating of a water-vapour-permeable hydrophilic polymer and to which coating the dots are secured.

51. A process as claimed in claim 50, in which the hydrophilic polymer is a polyurethane or polyester.

52. A process as claimed in any of claims 30 to 51, in which said dots are formed from an abrasion-resisting polyurethane having an elastic modulus of greater than 800 psi (5.5 N/mm⁻²).

53. A process as claimed in claim 51 in which the dot-forming polyurethane is water-vapour-permeable.

54. A process as claimed in any of claims 30 to 53, in which the material was a water resistance of greater than 0.1 kg/cm.

55. A process as claimed in any of claims 30 to 54, in which the material has a water-vapour-permeability in excess of 1500 g/m²/day.

56. A process as claimed in any of claims 30 to 55, in which the dots are applied in the form of a plurality of rosettes.

57. A process as claimed in any of claims 30 to 56, in which the abrasion resistance of the composite material is at least 1.5 times the abrasion resistance of the flexible substrate alone.

## Patentansprüche

1. Verbundmaterial für ein Bekleidungsstück, umfassend:
(a) ein wasserresistentes, wasserdampfdurchlässiges flexibles Substrat (2) mit einer ersten (6) und einer zweiten (8) Seite;
(b) einen an der ersten Seite des Substrats befestigten Stoff (4); und
(c) eine Mehrzahl diskreter, abriebbeständiger Polymer-Punkte (12), die ein diskontinuierliches, futtererzeugendes Muster auf der Oberfläche der zweiten Seite des Substrats bilden, wobei die Punkte Abrieb des flexiblen Substrats widerstehen.

2. Verbundmaterial nach Anspruch 1, bei dem die Punkte ein im wesentlichen glattes, nicht-winkelförmiges Profil aufweisen.

3. Verbundmaterial nach Anspruch 2, bei dem jeder der Punkte in der Substratebene einen Querschnitt besitzt, der im wesentlichen kreisförmig ist, und in einer senkrecht zu dem Substrat verlaufenden Ebene einen im wesentlichen teil-kugelförmigen Querschnitt hat.

4. Verbundmaterial nach einem der Ansprüche 1 bis 3, bei dem die maximale Abmessung im Querschnitt innerhalb der Substratebene weniger als 5000 Mikrometer beträgt.

5. Verbundmaterial nach Anspruch 4, bei dem die maximale Abmessung von 100 bis 1000 Mikrometer reicht.

6. Verbundmaterial nach Anspruch 5, bei dem die maximale Abmessung von 200 bis 800 Mikrometer reicht.

7. Verbundmaterial nach Anspruch 6, bei dem die maximale Abmessung von 400 bis 600 Mikrometer reicht.

8. Verbundmaterial nach einem vorhergehenden Anspruch, bei dem jeder Punkt eine Höhe im Bereich von 10 bis 200 Mikrometer besitzt.

9. Verbundmaterial nach Anspruch 8, bei dem jeder Punkt eine Höhe im Bereich von 70 bis 140 Mikrometer besitzt.

10. Verbundmaterial nach Anspruch 9, bei dem jeder Punkt eine Höhe im Bereich von 80 bis 100 Mikrometer besitzt.

11. Verbundmaterial nach einem vorhergehenden Anspruch, bei dem die Mitte jedes Punkts von der Mitte des benachbarten Punkts um 200 bis 2000 Mikrometer beabstandet ist.

12. Verbundmaterial nach Anspruch 11, bei dem die Mitte jedes Punkts von der Mitte eines benachbarten Punkts um 300 bis 1500 Mikrometer beabstandet ist.

13. Verbundmaterial nach Anspruch 12, bei dem die Mitte jedes Punkts von der Mitte eines benachbarten Punkts um 400 bis 900 Mikrometer beabstandet ist.

14. Verbundmaterial nach einem vorhergehenden Anspruch, bei dem das Verhältnis des Abstands zwischen Mitten benachbarter Punkte, der maximalen Abmessung jeden Punkts und der Höhe jedes Punkts im Bereich von etwa 7,5:1:1 bis etwa 15:10:1 liegt.

15. Verbundmaterial nach einem vorhergehenden Anspruch, bei dem die prozentuale Bedeckung der Oberfläche des Substrats durch die Punkte 20 bis 80% beträgt.

16. Verbundmaterial nach Anspruch 15, bei dem die prozentuale Abdeckung der Oberfläche des Substrats durch die Punkte 30 bis 70% beträgt.

17. Verbundmaterial nach Anspruch 16, bei dem die prozentuale Abdeckung der Oberfläche des Substrats durch die Punkte 40 bis 60% ausmacht.

18. Verbundmaterial nach einem vorhergehenden Anspruch, bei dem das Substrat eine poröse Membran ist.

19. Verbundmaterial nach Anspruch 18, bei dem die poröse Membran expandiertes Polytetrafluorethylen ist.

20. Verbundmaterial nach Anspruch 18 oder 19, bei dem das Substrat die poröse Membran und eine Beschichtung aus einem wasserdampfdurchlässigen, hydrophilen Polymer, an welcher die Punkte angebracht sind, aufweist.

21. Verbundmaterial nach Anspruch 20, bei dem das hydrophile Polymer ein Polyurethan oder Polyester ist.

22. Verbundmaterial nach einem vorhergehenden Anspruch, bei dem die Punkte aus einem abriebbeständigen Polyurethan mit einem Elastizitätsmodul von mehr als etwa 800 psi (5,5 Nmm⁻²) gebildet sind.

23. Verbundmaterial nach Anspruch 21, bei dem das punktebildende Polyurethan wasserdampfdurchlässig ist.

24. Verbundmaterial nach einem vorhergehenden Anspruch, bei dem das Material eine Wasserresistenz von mehr als 0,1 kg/cm aufweist.

25. Verbundmaterial nach einem vorhergehenden Anspruch, bei dem das Material eine Wasserdampfdurchlässigkeit von mehr als 1500 g/m²/Tag besitzt.

26. Verbundmaterial nach einem vorhergehenden Anspruch, bei dem die Punkte in Form einer Mehrzahl von Rosetten aufgebracht sind.

27. Verbundmaterial nach einem vorhergehenden Anspruch, bei dem die Abriebbeständigkeit des Verbundmaterials mindestens 1,5-mal so groß ist wie die Abriebbeständigkeit des flexiblen Substrats allein.

28. Kleidungsstück, umfassend ein Verbundmaterial nach einem vorhergehenden Anspruch.

29. Kleidungsstück nach Anspruch 28, bei dem die abriebbeständigen Polymer-Punkte die innerste Komponente des Kleidungsstücks zur Bildung eines Futters bilden.

30. Verfahren zum Herstellen eines Verbundmaterials für ein Kleidungsstück, umfassend das Befestigen eines Stoffs an einer ersten Seite eines flexiblen, wasserresistenten, wasserdampfdurchlässigen Substrats; und Anbringen einer Mehrzahl von abriebbeständigen Polymer-Punkten an einer zweiten Seite des Substrats, um ein diskontinuierliches futterbildendes Muster auf der Oberfläche der zweiten Seite zu bilden, welches Abrieb des flexiblen Substrats entgegenwirkt.

31. Verfahren nach Anspruch 30, umfassend das Anbringen der Polymer-Punkte mittels Tiefdruck erfolgt.

32. Verfahren nach Anspruch 30 oder 31, bei dem die Punkte ein im wesentlichen glattes, nicht-winkelförmiges Profil aufweisen.

33. Verfahren nach Anspruch 32, bei dem jeder der Punkte in der Substratebene einen im wesentlichen kreisförmigen Querschnitt und in einer senkrecht zu dem Substrat verlaufenden Ebene einen im wesentlichen teil-kugelförmigen Querschnitt aufweist.

34. Verfahren nach einem der Ansprüche 30 bis 33, bei dem die maximale Abmessung des Querschnitts in der Substratebene weniger als 5000 Mikrometer beträgt.

35. Verfahren nach Anspruch 34, bei dem die maximale Abmessung des Querschnitts von 100 bis 1000 Mikrometer reicht.

36. Verfahren nach Anspruch 35, bei dem die maximale Abmessung des Querschnitts von 200 bis 800 Mikrometer reicht.

37. Verfahren nach Anspruch 36, bei dem die maximale Abmessung des Querschnitts von 400 bis 600 Mikrometer reicht.

38. Verfahren nach einem der Ansprüche 30 bis 37, bei dem jeder Punkt eine Höhe im Bereich von 10 bis 200 Mikrometer besitzt.

39. Verfahren nach Anspruch 38, bei dem jeder Punkt eine Höhe im Bereich von 70 bis 140 Mikrometer aufweist.

40. Verfahren nach Anspruch 39, bei dem jeder Punkt eine Höhe im Bereich von 80 bis 100 Mikrometer besitzt.

41. Verfahren nach einem der Ansprüche 30 bis 40, bei dem die Mitte jedes Punkts von der Mitte eines benachbarten Punkts um 200 bis 2000 Mikrometer beabstandet ist.

42. Verfahren nach Anspruch 41, bei dem die Mitte jedes Punkts von der Mitte eines benachbarten Punkts um 300 bis 1500 Mikrometer beabstandet ist.

43. Verfahren nach Anspruch 42, bei dem die Mitte jedes Punkts von der Mitte eines benachbarten Punkts um 400 bis 900 Mikrometer beabstandet ist.

44. Verfahren nach einem der Ansprüche 30 bis 43, bei dem das Verhältnis des Abstands zwischen Mitten benachbarter Punkte, der maximalen Abmessung jedes Punkts und der Höhe jedes Punkts in dem Bereich von etwa 7,5:5:1 bis etwa 15:10:1 liegt.

45. Verfahren nach einem der Ansprüche 30 bis 44, bei dem die prozentuale Bedeckung der Oberfläche des Substrats durch die Punkte 20 bis 80% beträgt.

46. Verfahren nach Anspruch 45, bei dem die prozentuale Bedeckung der Oberfläche des Substrats durch die Punkte 30 bis 70% beträgt.

47. Verfahren nach Anspruch 46, bei dem die prozentuale Bedeckung der Oberfläche des Substrats durch die Punkte 40 bis 60% beträgt.

48. Verfahren nach einem der Ansprüche 30 bis 47, bei dem das Substrat eine poröse Membran ist.

49. Verfahren nach Anspruch 48, bei dem die poröse Membran expandiertes Polytetrafluorethylen ist.

50. Verfahren nach Anspruch 48 oder 49, bei dem das Substrat die poröse Membran und eine Beschichtung aus wasserdampfdurchlässigem, hydrophilem Polymer, an der die Punkte befestigt sind, umfaßt.

51. Verfahren nach Anspruch 50, bei dem das hydrophile Polymer ein Polyurethan oder Polyester ist.

52. Verfahren nach einem der Ansprüche 30 bis 51, bei dem die Punkte aus einem abriebfesten Polyurethan mit einem Elastizitätsmodul von mehr als 800 psi (5,5 N/mm⁻²) gebildet sind.

53. Verfahren nach Anspruch 51, bei dem das punktebildende Polyurethan wasserdampfdurchlässig ist.

54. Verfahren nach einem der Ansprüche 30 bis 53, bei dem das Material eine Wasserresistenz von mehr als 0,1 kg/cm aufweist.

55. Verfahren nach einem der Ansprüche 30 bis 54, bei dem das Material eine Wasserdampfdurchlässigkeit von mehr als 1500 g/m²/Tag besitzt.

56. Verfahren nach einem der Ansprüche 30 bis 55, bei dem die Punkte in Form mehrerer Rosetten aufgebracht werden.

57. Verfahren nach einem der Ansprüche 30 bis 56, bei dem die Abriebbeständigkeit des Verbundmaterials mindestens 1,5-mal so groß ist wie diejenige des flexiblen Substrats allein.

## Revendications

1. Matière composite pour un vêtement comprenant :
(a) un substrat (2) flexible, perméable à la vapeur d'eau, résistant à l'eau ayant un premier (6) et un deuxième (8) côté ;
(b) un tissu (4) fixé auxdits premier côté du substrat ; et
(c) une pluralité de points (12) discrets polymères résistants à l'abrasion formant un dessin formant un revêtement discontinu sur la surface dudit deuxième côté du substrat, points qui résistent à l'abrasion du substrat flexible.

2. Matière composite selon la revendication 1, dans laquelle les points ont à un profil essentiellement lisse, non angulaire.

3. Matière composite selon la revendication 2, dans laquelle chacun des points possède une coupe droite dans le plan du substrat qui est essentiellement circulaire et une coupe droite qui est essentiellement une partie de sphère dans un plan normal au substrat.

4. Matières composites selon l'une quelconque des revendication 1 à 3, dans laquelle la dimension maximale de la coupe droite dans le plan du substrat est inférieur à 5000 µm.

5. Matière composite selon la revendication 4, dans laquelle ladite dimension maximale vaut de 100 à 1000 µm.

6. Matière composite selon la revendication 5, dans laquelle ladite dimension maximale vaut de 200 à 800 µm.

7. Matière composite selon la revendication 6, dans laquelle ladite dimension maximale vaut de 400 à 600 µm.

8. Matière composite selon l'une quelconque des revendications précédentes, dans laquelle chacun des points possède une hauteur dans la gamme de 10 à 200 µm.

9. Matière composite selon la revendication 8, dans laquelle chaque point possède une hauteur dans la gamme de 70 à 140 µm.

10. Matière composite selon la revendication 9, dans laquelle chaque point possède une hauteur dans la gamme de 80 à 100 µm.

11. Matière composite selon l'une quelconque des revendications précédentes, dans laquelle le centre de chaque point est espacé du centre d'un point adjacent de 200 à 2000 µm.

12. Matière composite selon la revendication 11, dans laquelle le centre de chaque point est espacé du centre d'un point adjacent de 300 à 1500 µm.

13. Matière composite selon la revendication 12, dans laquelle le centre de chaque point est espacé du centre d'un point adjacent de 400 à 900 µm.

14. Matière composite selon l'une quelconque des revendications précédentes, dans laquelle le rapport de la distance entre centres de deux points adjacents, la dimension maximale de chaque point et la hauteur de chaque point est dans la gamme d'environ 7,5:5:1 à environ 15:10:1.

15. Matière composite selon l'une quelconque des revendications précédentes, dans laquelle le pourcentage de recouvrement de la surface du substrat par les points est de 20 à 80%.

16. Matière composite selon la revendication 15, dans laquelle le pourcentage de recouvrement de la surface du substrat par les points est de 30 à 70%.

17. Matière composite selon la revendication 16, dans laquelle le pourcentage de recouvrement de la surface du substrat par les points est de 40 à 60%.

18. Matière composite selon l'une quelconque des revendications précédentes, dans laquelle le substrat est une membrane poreuse.

19. Matière composite selon la revendication 18, dans laquelle la membrane poreuse est le polytétrafluoroéthylène expansé.

20. Matière composite selon la revendication 18 ou 19, dans laquelle le substrat comprend la membrane poreuse et un revêtement d'un polymère hydrophile perméable à la vapeur d'eau, revêtement auquel les points sont fixés.

21. Matière composite selon la revendication 20, dans laquelle le polymère hydrophile est un polyuréthane ou un polyester.

22. Matière composite selon l'une quelconque des revendications précédentes, dans laquelle lesdits points sont formés à partir d'un polyuréthane résistant à l'abrasion en ayant un module d'élasticité supérieur à environ 5,5 N/mm² (800 psi).

23. Matière composite selon la revendication 21, dans laquelle le polyuréthane formant les points est perméable à la vapeur d'eau.

24. Matière composite selon l'une quelconque des revendications précédentes, dans laquelle la matières possède une résistance à l'eau supérieure à 0,1 kg/cm.

25. Matière composite selon l'une quelconque des revendications précédentes, dans laquelle la matières possède une perméabilité à la vapeur d'eau dépassant 1500 g/m²/jour

26. Matière composite selon l'une quelconque des revendications précédentes, dans laquelle les points sont appliquées dans la forme d'une pluralité de rosettes.

27. Matière composite selon l'une quelconque des revendications précédentes, dans laquelle la résistance à l'abrasion de la matière composite est au moins 1,5 fois la résistance à l'abrasion du substrat flexible seul.

28. Vêtement comprenant une matière composite selon l'une quelconque des revendications précédentes.

29. Vêtement selon la revendication 28, dans lequel les points polymères résistants à l'abrasion forme le composant le plus interne du vêtement pour former un revêtement.

30. Procéder de fabrication d'une matière composite pour un vêtement comprenant les étapes consistant à fixer un tissu à un premier côté d'un substrat flexible, perméable à la vapeur d'eau, résistant à l'eau ; et à appliquer une pluralité de points polymères résistants à l'abrasion à un deuxième côté dudit substrat afin de former un dessin formant un revêtement discontinu sur la surface dudit deuxième côté pour résister à l'abrasion du substrat flexible.

31. Procédé selon la revendication 30, consistant à appliquer les points polymères au moyen d'une impression en creux.

32. Procédé selon la revendication 30 ou 31, dans lequel les points possède un profil essentiellement lisse, non angulaire.

33. Procédé selon la revendication 32, dans lequel les points possède une coupe droite dans le plan du substrat qui est essentiellement circulaire et une coupe droite qui est essentiellement une partie de sphère dans un plan normal au substrat.

34. Procédé selon l'une quelconque des revendications 30 à 33, dans lequel la dimension maximale de la coupe droite dans le plan du substrat est inférieur à 5000 µm.

35. Procédé selon la revendication 34, dans lequel la dimension maximale de la coupe droite vaut de 100 à 1000 µm.

36. Procédés selon la revendication 35, dans lequel la dimension maximale de la coupe droite vaut de 200 à 800 µm.

37. Procédé selon la revendication 36, dans lequel la dimension maximale de la coupe droite vaut de 400 à 600 µm.

38. Procédé selon l'une quelconque des revendications 30 à 37, dans lequel chaque point possède une hauteur dans la gamme de 10 à 200 µm.

39. Procédé selon la revendication 38, dans lequel chaque point possède une hauteur dans la gamme de 70 à 140 µm.

40. Procédé selon la revendication 39, dans lequel chaque point possède une hauteur dans la gamme de 80 à 100 µm.

41. Procédé selon l'une quelconque des revendications 30 à 40, dans lequel le centre de chaque point est espacé du centre d'un point adjacent de 200 à 2000 µm.

42. Procédé selon la revendication 41, dans lequel le centre de chaque point est espacé du centre d'un point adjacent de 300 à 1500 µm.

43. Procédé selon la revendication 42, dans lequel le centre de chaque point est espacé du centre d'un point adjacent de 400 à 900 µm.

44. Procédé selon l'une quelconque des revendication 30 à 43, dans lequel le rapport de la distance entre centres de points adjacents, la dimension maximale de chaque point et la hauteur de chaque point est dans la gamme d'environ 7,5:5:1 à environ 15:10:1.

45. Procédé selon l'une quelconque des revendication 30 à 44, dans lequel le pourcentage de recouvrement de la surface du substrat par les points est de 20 à 80%.

46. Procédé selon la revendication 45, dans lequel le pourcentage de recouvrement de la surface du substrat par les points est de 30 à 70%.

47. Procédé selon la revendication 46, dans lequel le pourcentage de recouvrement de la surface du substrat par les points est de 40 à 60%.

48. Procédé selon l'une quelconque des revendications 30 à 47, dans lequel le substrat est une membrane poreuse.

49. Procédé selon la revendication 48, dans lequel la membrane poreuse est le polytétrafluoroéthylène expansé.

50. Procédé selon les revendications 48 ou 49, dans lequel le substrat comprend la membrane poreuse et un revêtement d'un polymère hydrophile perméable à la vapeur d'eau, revêtement auquel les points sont fixés.

51. Procédé selon la revendication 50, dans lequel le polymère hydrophile est un polyuréthane ou un polyester.

52. Procédé selon l'une quelconque des revendications 30 à 51, dans lequel lesdits points sont formés à partir d'un polyuréthane résistant à l'abrasion ayant un module d'élasticité supérieur à 5,5 N/mm² (800 psi).

53. Procédé selon la revendication 51, dans lequel le polyuréthane formant des points est perméable à la vapeur d'eau.

54. Procédé selon l'une quelconque des revendications 30 à 53, dans lequel la matière possède une résistance à l'eau supérieur à 0,1 kg/cm.

55. Procédé selon l'une quelconque des revendications 30 à 54, dans lequel la matière possède une perméabilité à la vapeur d'eau dépassant 1500 g/m²/ jour.

56. Procédé selon l'une quelconque des revendications 30 à 55, dans lequel les points sont appliqués sous la forme d'une pluralité de rosettes.

57. Procédé selon l'une quelconque des revendications 30 à 56, dans lequel la résistance à l'abrasion de la matière composite est au moins 1,5 fois la résistance à l'abrasion du substrat flexible seul.
